# EUROPEAN PATENT APPLICATION

(11) **EP 4 438 663 A1**
(43) Date of publication of application: **02.10.2024**
(21) Application number: 24163442.7
(22) Date of filing: 14.03.2024
(51) Int. Cl.: C08J 9/00, C08L 75/04, C08G 18/08

(54) **SLOW RECOVERY POLYURETHANE FOAM**

(30) Priority: 27.03.2023 CN 202310317374
(71) Applicant: Honeywell Safety Products USA, Inc., Charlotte, NC 28202 (US)
(72) Inventor: LI, Shulong, Charlotte, 28202 (US); RUAN, Xiaobai, Charlotte, 28202 (US); SHI, Xingui, Charlotte, 28202 (US); SHI, Quan, Charlotte, 28202 (US)
(74) Representative: Haseltine Lake Kempner LLP

(57) **Abstract**

A method of making a bio-based, slow recovery polyurethane foam includes preparing an aqueous mixture that includes a resin and an additive. The resin, the additive, or both, can be bio-based. The method can include combining a hydrophilic polyurethane prepolymer with the aqueous mixture. The method can include chemically reacting the hydrophilic polyurethane prepolymer with the aqueous mixture to create a foam mixture. Chemically reacting the hydrophilic polyurethane prepolymer with the aqueous mixture may generate a foaming agent that includes carbon dioxide.

## Description

### TECHNICAL FIELD

The present application relates generally to a slow recovery polyurethane foam, and a method of making the slow recovery polyurethan foam. More specifically, the present application relates to a bio-based, slow recovery polyurethane foam, and a method of making the bio-based slow recovery polyurethan foam

### BACKGROUND

Polyurethane foam is conventionally made from petroleum-based materials. Polyurethane foam is commonly used to manufacture earplugs, mattresses, pillows, and cushions. Manufacturing polyurethane foam from petroleum-based products may have a negative environmental impact because petroleum is a non-renewable resource and the production of petroleum products may have a relatively large carbon emission impact. As such, a polyurethane foam that is manufactured from bio-based materials, at least partially, instead of petroleum-based materials, would be welcomed in the art to reduce the negative environmental impact of polyurethane foam.

The inventors have identified numerous deficiencies and problems with the existing technologies in this field. Through applied effort, ingenuity, and innovation, many of these identified deficiencies and problems have been solved by developing solutions that are structured in accordance with the embodiments of the present disclosure, many examples of which are described in detail herein.

### BRIEF SUMMARY

In general, embodiments of the present disclosure provided herein include methods and apparatuses to provide for improved slow recovery polyurethane foam. More specifically, embodiments of the present disclosure provided herein include methods and apparatuses to provide for bio-based, slow recovery polyurethane foam.

In various aspects, a method of making a bio-based, slow recovery polyurethane foam includes preparing an aqueous mixture that includes a resin and an additive. The resin, the additive, or both, can be bio-based. The method can include combining a hydrophilic polyurethane prepolymer with the aqueous mixture. The method can include chemically reacting the hydrophilic polyurethane prepolymer with the aqueous mixture to create a foam mixture. Chemically reacting the hydrophilic polyurethane prepolymer with the aqueous mixture may generate a foaming agent that includes carbon dioxide.

In various examples, the bio-based, slow recovery polyurethane foam has a concentration of bio-based material that is at least twenty-five percent.

In various examples, the additive includes at least a forty percent concentration of a bio-based additive.

In various examples, the additive includes a natural wax. The natural wax can include a carnauba wax, a bio-based polyethylene wax, a bio-based polypropylene wax, a paraffin, an amide derived from fatty acids, a polyamide derived from fatty acids, a fatty acid, a fatty alcohol, a triglyceride, an animal fat, or a combination thereof. A concentration of the natural wax within the aqueous mixture can be at least 0.5 percent and up to 20 percent.

In various examples, the additive includes a rosin, a rosin ester, or a combination thereof. A concentration of the rosin or the rosin ester, or a combination thereof within the aqueous mixture can be at least 5 percent and up to 60 percent.

In various examples, the additive includes a natural wax. The natural wax can include a carnauba wax, a bio-based polyethylene wax, a bio-based polypropylene wax, a paraffin, an amide derived from fatty acids, a polyamide derived from fatty acids, a fatty acid, a fatty alcohol, a triglyceride, an animal fat, or a combination thereof. A concentration of the natural wax within the aqueous mixture can be at least 0.5 percent and up to 20 percent.

In various examples, the resin includes a bio-based resin.

In various examples, the resin includes an acrylic resin, an alkyd resin, an ethylene-vinyl acetate copolymer resin, a natural rubber resin, or a combination thereof.

In various examples, the ethylene-vinyl acetate copolymer resin includes a bio-based ethylene monomer and a vinyl-acetate synthesized from a bio-based acetic acid.

In various examples, the resin includes an acrylic resin. The acrylic resin can include an alkyl methacrylate monomer and/or an alkyl acrylate monomer.

In various examples, the hydrophilic polyurethane prepolymer includes a chemical reaction product of: an aromatic isocyanate, an aliphatic isocyanate, or a combination thereof; and
at least one polyol comprising polyethylene glycol.

In various examples, the hydrophilic polyurethane prepolymer includes a chemically reactive isocyanate end group in the molecular structure.

In various examples, the aqueous mixture includes water. Chemically reacting the hydrophilic polyurethane prepolymer with the aqueous mixture can include chemically reacting the water of the aqueous mixture with the chemically reactive isocyanate end group of the hydrophilic polyurethane prepolymer.

In various examples, a ratio between (i) the hydrophilic polyurethane prepolymer and (ii) a combination of the resin and the additive is at least 1:0.5 and up to 1:2.

In various examples, the additive includes at least one of a rosin, a rosin ester, a natural wax, or a combination thereof.

In various examples, chemically reacting the hydrophilic polyurethane prepolymer with the aqueous mixture occurs within a mold configured to form an earplug. The method can include curing the foam mixture to form the earplug. The earplug can be squeezed by an individual's hand and the earplug can have a time lag to recover to ninety percent of an original volume of at least ten seconds, when squeezed.

In various examples, the additive includes a water insoluble filler. The water insoluble filler can include starch, cellulose, lignin, or a combination thereof.

In various aspects, a bio-based, slow recovery polyurethane foam includes a hydrophilic polyurethane prepolymer, a resin, and an additive. The resin, the additive, or both, can be bio-based.

In various examples, the bio-based, slow recovery polyurethane foam has a concentration of at least twenty-five percent of bio-based materials.

In various examples, the hydrophilic polyurethane prepolymer is bio-based.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below. Other features, aspects, and advantages of the subject matter will become apparent from the description, the drawings, and the claims.

### BRIEF DESCRIPTION OF THE DRAWINGS

Having thus described certain example embodiments of the present disclosure in general terms above, non-limiting and non-exhaustive embodiments of the subject disclosure are described with reference to the following figures.

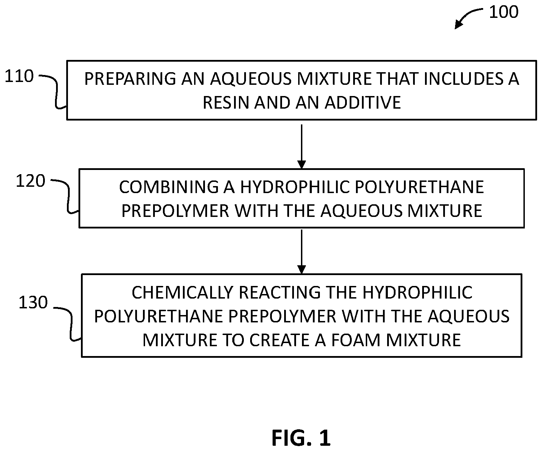

FIG. 1 provides a method of making a bio-based, slow recovery polyurethane foam, in accordance with an example embodiment.

### DETAILED DESCRIPTION

One or more embodiments are now more fully described with reference to the accompanying drawings, wherein like reference numerals are used to refer to like elements throughout and in which some, but not all embodiments of the inventions are shown. In the following description, for purposes of explanation, numerous specific details are set forth in order to provide a thorough understanding of the various embodiments. It is evident, however, that the various embodiments can be practiced without these specific details. It should be understood that some, but not all embodiments are shown and described herein. Indeed, the embodiments may be embodied in many different forms, and accordingly this disclosure should not be construed as limited to the embodiments set forth herein. Rather, these embodiments are provided so that this disclosure will satisfy applicable legal requirements.

As used herein, the term "exemplary" means serving as an example, instance, or illustration. Any aspect or design described herein as "exemplary" is not necessarily to be construed as preferred or advantageous over other aspects or designs. Rather, use of the word exemplary is intended to present concepts in a concrete fashion. In addition, while a particular feature may be disclosed with respect to only one of several implementations, such feature may be combined with one or more other features of the other implementations as may be desired and advantageous for any given or particular application. Furthermore, to the extent that the terms "includes" and "including" and variants thereof are used in either the detailed description or the claims, these terms are intended to be inclusive in a manner similar to the term "comprising."

As used herein, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

As used herein, the term "bio-based" refers to a material or substance that is derived, completely or partially, from biomass. As used herein, the term "biomass" refers to matter derived from recently living organisms, such as animals, plants, and wood. Bio-based does not include materials or substances that are derived completely from petroleum.

As used herein, the term "renewable" refers to a material or substance that will naturally replenish over time. For example, a renewable source can include plants and trees. In contrast, petroleum is "non-renewable".

Referring now to FIG. 1, a flowchart of a method 100 for making a bio-based, slow recovery polyurethane foam is provided, in accordance with an example embodiment. As depicted in FIG. 1, the method 100 can include a step 110 of preparing an aqueous mixture that comprises a resin and an additive. The resin, the additive, or both can be bio-based. The method 100 can include a step 120 of combing a hydrophilic polyurethane prepolymer with the aqueous mixture. The hydrophilic polyurethane prepolymer can be bio-based.

As will be appreciated, using a hydrophilic polyurethane prepolymer, instead of a hydrophobic material, such as hydrophobic polyol or urethane, which is traditionally used, has various benefits. For example, the hydrophilic polyurethane prepolymer may be more compatible with the aqueous mixture, the resin, and/or the additive than the hydrophobic material. Therefore, the hydrophilic polyurethane prepolymer may be easier to combine with the aqueous mixture, the resin, and the additive.

In various examples, the resin can be at least partially bio-based. For example, the resin is, or includes, castor oil, vegetable oil, soybean oil, or a combination thereof. In various examples, the resin is, or includes, a non-polyurethane resin.

Additionally or alternatively, the resin can be, or can include, an acrylic resin, an alkyd resin, an ethylene-vinyl acetate copolymer resin, a natural rubber resin, or a combination thereof.

When the resin is, or includes, an acrylic resin, the acrylic resin can include an alkyl methacrylate monomer and/or an alkyl acrylate monomer. The alkyl group of the alkyl methacrylate monomer and/or the alkyl acrylate monomer can be manufactured, at least partially, from an ethyl group. The ethyl group can be a bio-ethanol that is derived from fermentation of cellulosic agricultural waste and/or starch or sugar agricultural products. The alkyl group of the alkyl methacrylate monomer and/or the alkyl acrylate monomer can be manufactured, at least partially, from a butyl group. The butyl group can be bio-based butanol that is made from the fermentation of agricultural products. The alkyl group of the alkyl methacrylate monomer and/or the alkyl acrylate monomer can be manufactured, at least partially, from a hexyl group. The hexyl group can be bio-based hexanol. The alkyl group of the alkyl methacrylate monomer and/or the alkyl acrylate monomer can be manufactured, at least partially, from a bio-based fatty alcohol, such as fatty acid methyl ester (C6-C24).

When the resin is, or includes, an ethylene-vinyl acetate copolymer resin, the resin can at least partially be manufactured from a bio-based ethylene monomer, and vinyl-acetate synthesized from bio-based acetic acid. The concentration of the bio-based materials or substances within the resin can be greater than zero percent and up to seventy percent, such as at least thirty percent and up to sixty percent.

In various examples, the additive can be at least partially bio-based. For example, the additive can be at least forty percent bio-based. In various examples, the additive is, or includes, a non-polyurethane additive. In various examples, the additive includes a water insoluble filler. For example, the water insoluble filler can include starch, cellulose, lignin, or a combination thereof.

The additive can be, or can include, a natural wax. The natural wax can be, or can include, a carnauba wax, a bio-based polyethylene wax, a bio-based polypropylene wax, a paraffin, an amide derived from fatty acids, a polyamide derived from fatty acids, a fatty acid, a fatty alcohol, a triglyceride, an animal fat, or a combination thereof. The additive can be, or can include, a rosin, a rosin ester, or a combination thereof.

In various examples, a ratio between the hydrophilic polyurethane prepolymer and a combination of the resin and the additive is at least 1:0. 5 and up to 1 :2.5, such as at least 1:1 and up to 1:2. Having the ratio between the hydrophilic polyurethane prepolymer and the combination of the resin and the additive to be at least 1:0.5 and up to 1:2.5 has various benefits. For example, the resin and the additive may provide the slow recovery characteristics to the slow recovery polyurethane foam. As such, a generous amount of the resin and the additive may be necessary to achieve desired results. For example, a ratio of at least 1:1 and up to 1:2.5 may result in a slow recovery polyurethane foam that has a time lag to recover to ninety percent of an original volume of at least ten seconds, preferably above twenty seconds. This slow recovery time may be advantageous for some applications, such as when the slow recovery polyurethane foam is shaped and configured for use as an earplug for noise attenuation purposes.

In various examples, a concentration of the combination of bio-based resins, bio-based additives, and bio-based hydrophilic polyurethane prepolymer within the foam mixture (e.g., a combination of the hydrophilic polyurethane prepolymer and the aqueous mixture that includes the resin and the additive) is at least twenty-five percent. As will be appreciated, having the concentration of the combination of bio-based resins, bio-based additives, and bio-based hydrophilic polyurethane within the foam mixture has various benefits. For example, it may decrease the negative environmental impact of the slow recovery polyurethane foam by reducing carbon emissions emitted during the manufacturing of the polyurethane foam and/or reducing carbon emissions emitted during the manufacturing of the materials and substances used in the manufacturing of the polyurethane foam.

When the additive is, or includes a rosin or a rosin ester, or a combination thereof, a concentration of the rosin or the rosin ester, or a combination thereof, within the aqueous mixture can be at least five percent and up to sixty percent. When the additive comprises a natural wax (e.g., a carnauba wax, a bio-based polyethylene wax, a bio-based polypropylene wax, a paraffin, an amide derived from fatty acids, a polyamide derived from fatty acids, a fatty acid, a fatty alcohol, a triglyceride, an animal fat, or a combination thereof), a concentration of the natural wax within the aqueous mixture can be at least 0.5 percent and up to 20 percent.

In various examples, and as depicted in FIG. 1, the method 100 can include a step 130 of chemically reacting the hydrophilic polyurethane prepolymer with the aqueous mixture to create a foam mixture. The aqueous mixture can be, or can include water. The aqueous mixture can react with the hydrophilic polyurethane prepolymer to generate a blowing agent, such as carbon dioxide. The blowing agent, such as carbon dioxide, can produce a cellular structure via a foaming process. As such, the blowing agent can be a foaming agent that facilitates the formation of foam. For example, the generated carbon dioxide can cause the aqueous mixture and the hydrophilic polyurethane prepolymer to form into a foam-like cellular structure.

In various examples, the hydrophilic polyurethane prepolymer includes a chemical reaction product of an aromatic isocyanate or an aliphatic isocyanate, or a combination thereof, and at least one polyol comprising polyethylene glycol. For example, the hydrophilic polyurethane prepolymer can include a chemically reactive isocyanate end groups in the molecular structure. When the hydrophilic polyurethane prepolymer is combined and mixed with the aqueous mixture, the water may react with the reactive isocyanate end group of the polyurethane prepolymer to generate the carbon dioxide, which acts as the foaming agent to create the foam-like cellular structure. In various examples, the hydrophilic polyurethane prepolymer does not have a chemical reaction with the resin, the hydrophilic polyurethane prepolymer, or both.

In various examples, the step 130 of chemically reacting the hydrophilic polyurethane prepolymer with the aqueous mixture occurs within a mold. The foam mixture can be injected or poured into the mold. For example, the hydrophilic polyurethane prepolymer can be chemically reacted with the aqueous mixture within a mold that is configured to form an earplug to be inserted into an individual's ear for noise attenuation by injecting or pouring the mixture within the mold.

After the hydrophilic polyurethane prepolymer is chemically reacted with the aqueous mixture, the foam mixture can be allowed to cure. Curing can occur at an ambient temperature and/or at an ambient pressure. However, in other examples, curing can occur at a temperature that is higher or lower than ambient temperature and/or at a pressure that is higher or lower than ambient pressure. Once the foam mixture is cured, the slow recovery polyurethane foam can be removed from the mold.

The resulting slow recovery polyurethane foam can result in a material that includes the hydrophilic polyurethane prepolymer, the resin, and the additive. As discussed, the resin, the additive, and/or the hydrophilic polyurethane prepolymer can be bio-based. In various examples, the resulting slow recovery polyurethane foam can have a concentration of the bio-based resin, the bio-based additive, and/or the bio-based hydrophilic polyurethane prepolymer that is at least twenty-five percent.

As will be appreciated, having a slow recovery polyurethane foam that has a concentration of at least twenty-five percent of bio-based materials can be beneficial. For example, in the context of when the slow recovery polyurethane foam is shaped for use as an earplug, the at least twenty-five percent concentration of bio-based materials may reduce an environmental impact of the earplug. For example, manufacturing earplugs from petroleum products produces carbon emissions during the manufacturing process of the earplugs and/or during the manufacturing process of the materials and substances that go into manufacturing the earplugs. However, manufacturing earplugs from bio-based products may produce less carbon emissions during the manufacturing process of the earplugs and/or during the manufacturing process of the materials and substances that go into the earplugs, as compared to petroleum-based products.

### Conclusion

The above descriptions of various embodiments of the subject disclosure and corresponding figures and what is described in the Abstract, are described herein for illustrative purposes, and are not intended to be exhaustive or to limit the disclosed embodiments to the precise forms disclosed. It is to be understood that one of ordinary skill in the art may recognize that other embodiments having modifications, permutations, combinations, and additions can be implemented for performing the same, similar, alternative, or substitute functions of the disclosed subject matter, and are therefore considered within the scope of this disclosure. Therefore, the disclosed subject matter should not be limited to any single embodiment described herein, but rather should be construed in breadth and scope in accordance with the appended claims below. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method of making a bio-based, slow recovery polyurethane foam, the method comprising:
preparing an aqueous mixture that comprises a resin and an additive, wherein the resin, the additive, or both, are bio-based;
combining a hydrophilic polyurethane prepolymer with the aqueous mixture; and
chemically reacting the hydrophilic polyurethane prepolymer with the aqueous mixture to create a foam mixture, wherein chemically reacting the hydrophilic polyurethane prepolymer with the aqueous mixture generates a foaming agent comprising carbon dioxide.

2. The method of claim 1, wherein the bio-based, slow recovery polyurethane foam has a concentration of bio-based material that is at least twenty-five percent.

3. The method of claim 1, wherein the additive comprises at least a forty percent concentration of a bio-based additive.

4. The method of claim 1, wherein the additive comprises a natural wax, wherein the natural wax comprises a carnauba wax, a bio-based polyethylene wax, a bio-based polypropylene wax, a paraffin, an amide derived from fatty acids, a polyamide derived from fatty acids, a fatty acid, a fatty alcohol, a triglyceride, an animal fat, or a combination thereof, and
wherein a concentration of the natural wax within the aqueous mixture is at least 0.5 percent and up to 20 percent.

5. The method of claim 1, wherein the additive comprises a rosin, a rosin ester, or a combination thereof, and
wherein a concentration of the rosin or the rosin ester, or a combination thereof within the aqueous mixture is at least 5 percent and up to 60 percent.

6. The method of claim 5, wherein the additive comprises a natural wax, wherein the natural wax comprises a carnauba wax, a bio-based polyethylene wax, a bio-based polypropylene wax, a paraffin, an amide derived from fatty acids, a polyamide derived from fatty acids, a fatty acid, a fatty alcohol, a triglyceride, an animal fat, or a combination thereof, and
wherein a concentration of the natural wax within the aqueous mixture is at least 0.5 percent and up to 20 percent.

7. The method of claim 1, wherein the resin comprises a bio-based resin.

8. The method of claim 1, wherein the resin comprises an acrylic resin, an alkyd resin, an ethylene-vinyl acetate copolymer resin, a natural rubber resin, or a combination thereof.

9. The method of claim 1, wherein the resin comprises an ethylene-vinyl acetate copolymer resin that comprises:
a bio-based ethylene monomer; and
a vinyl-acetate synthesized from a bio-based acetic acid.

10. The method of claim 1, wherein the resin comprises an acrylic resin, wherein the acrylic resin comprises an alkyl methacrylate monomer and/or an alkyl acrylate monomer.

11. The method of claim 1, wherein the hydrophilic polyurethane prepolymer comprises a chemical reaction product of:
an aromatic isocyanate, an aliphatic isocyanate, or a combination thereof; and
at least one polyol comprising polyethylene glycol.

12. The method of claim 1, wherein the hydrophilic polyurethane prepolymer comprises a chemically reactive isocyanate end group in the molecular structure.

13. The method of claim 12, wherein the aqueous mixture comprises water, and wherein chemically reacting the hydrophilic polyurethane prepolymer with the aqueous mixture comprises chemically reacting the water of the aqueous mixture with the chemically reactive isocyanate end group of the hydrophilic polyurethane prepolymer.

14. The method of claim 1, wherein a ratio between (i) the hydrophilic polyurethane prepolymer and (ii) a combination of the resin and the additive is at least 1:0.5 and up to 1:2.

15. The method of claim 1, wherein the additive comprises at least one of a rosin, a rosin ester, a natural wax, or a combination thereof.
